# DEMANDE DE BREVET EUROPEEN

(11) **EP 1 176 688 A1**
(43) Date de publication de la demande: **30.01.2002**
(21) Numéro de dépôt: 01410092.9
(22) Date de dépôt: 23.07.2001
(51) Int. Cl.: H02H 9/00, H02M 7/12

(54) **Convertisseur alternatif-continu**

(30) Priorité: 28.07.2000 FR 0009939
(71) Demandeur: STMicroelectronics S.A., 92120 Montrouge (FR)
(72) Inventeur: Moindron, Laurent, 37390 Notre Dame D'Oe (FR)
(74) Mandataire: de Beaumont, Michel

(57) **Abrégé**

L'invention concerne un convertisseur alternatif-continu comprenant un condensateur de filtrage (CF) qui comporte en outre : une première branche (21) comportant essentiellement un premier moyen de redressement (210) et un moyen de limitation du courant (R) ; une seconde branche (22) comportant essentiellement un second moyen de redressement (220) dont la chute de tension série est limitée à celle des commutateurs le constituant ; et un moyen de sélection (23) de l'un des deux moyens de redressement.

## Description

La présente invention concerne, de façon générale, les convertisseurs alternatif-continu comportant un élément de redressement et un élément de filtrage. La présente invention concerne plus particulièrement la protection des charges de tels convertisseurs à l'encontre de pics de courant.

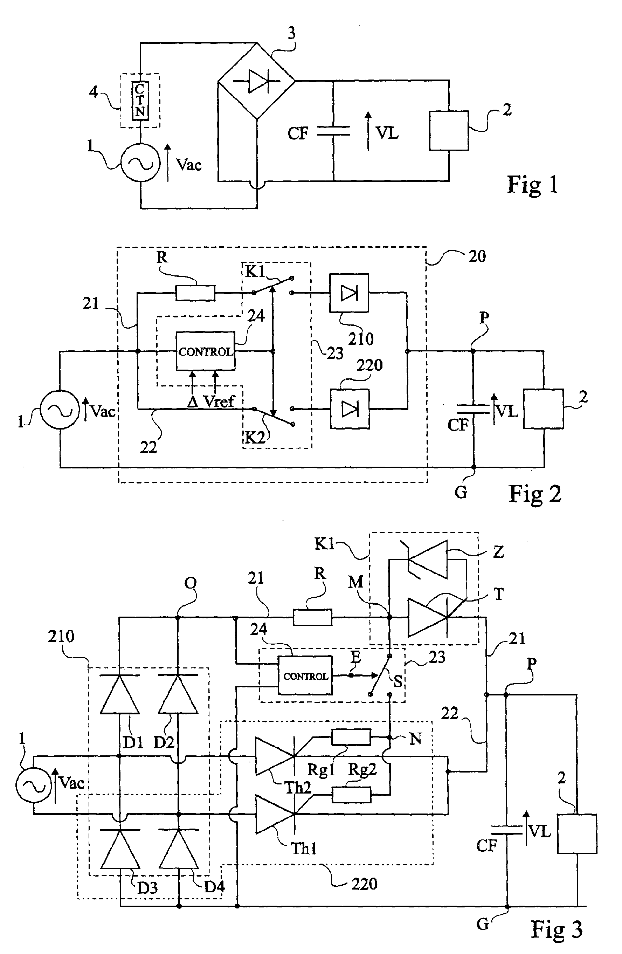

La figure 1 illustre, de façon schématique par des blocs fonctionnels, un exemple classique d'un tel convertisseur. Une source 1 d'une haute tension alternative Vac alimente une charge 2 par l'intermédiaire d'un moyen de redressement 3 et d'un condensateur de filtrage CF. Le condensateur CF et la charge 2 sont connectés en parallèle entre deux bornes de sortie redressée du moyen de redressement 3 dont deux bornes d'entrée alternative sont reliées aux bornes de la source 1.

L'invention sera exposée en relation avec un moyen de redressement 3 de type double alternance ou "pleine onde". Toutefois, l'invention s'applique également aux redressements de type mono-alternance ("demi-onde") ou autres pour lesquels les principes et problèmes exposés ci-après se rencontrent également.

Le fonctionnement du convertisseur de la figure 1 est le suivant. Tant que la tension Vac délivrée par la source 1 est supérieure - en valeur absolue - à la tension redressée et filtrée VL aux bornes du condensateur CF, la source 1 alimente la charge 2 et le condensateur CF se charge. Dès que la tension Vac devient inférieure à la tension VL, le moyen de redressement 3 est dévalidé, généralement automatiquement, et isole ses bornes d'entrée alternative de ses bornes de sortie redressée. La charge 2 est alors alimentée par la décharge du condensateur CF jusqu'à ce que la tension d'alimentation Vac redevienne supérieure à la tension redressée et filtrée VL.

Un inconvénient de ces convertisseurs alternatif-continu classiques réside dans la transmission, par le moyen de redressement 3, d'éventuels pics de courant qui apparaissent, par exemple, lors de la première mise en route ou suite à des micro-coupures de l'alimentation. Par micro-coupures on désigne des interruptions de l'alimentation d'une durée telle que le condensateur CF se décharge jusqu'à un niveau nettement inférieur au niveau moyen du régime établi. Comme le convertisseur est généralement dimensionné pour une puissance restituée adaptée à la charge, un tel phénomène se produit typiquement pour des coupures durant plus d'une période de l'alimentation alternative (par exemple, 20 ms pour une alimentation à 50 Hz).

Pour pallier cet inconvénient, diverses approches ont été proposées.

Une première approche consiste à dimensionner le condensateur CF et la charge 2 en fonction de tels pics de courant. Cela n'est pas souhaitable car cela impose l'utilisation de composants relativement encombrants. En outre, cela n'est pas possible avec toutes les charges.

L'approche la plus courante prévoit typiquement, comme l'illustre la figure 1 par des pointillés, un dispositif 4 de limitation de courant entre la source 1 et le moyen de redressement 3. Ce dispositif 4 peut être réalisé de diverses façons. Généralement, il s'agit d'une résistance à coefficient de température négatif, ou résistance CTN. Une telle résistance CTN présente, quand elle est froide, une résistance très élevée. Sous l'effet du courant qui la traverse, elle chauffe et sa résistance décroît. Un tel dispositif permet donc de réduire efficacement la transmission de pics de courants lors de la première mise sous tension du dispositif. Toutefois, en cas d'interruption accidentelle de l'alimentation pendant une durée très courte, la résistance CTN n'a pas le temps de refroidir, et ne peut par conséquent pas limiter le courant à la réapparition de l'alimentation.

Pour résoudre ce problème, on a développé des dispositifs de limitation propres à éviter la transmission de pics de courant suite à une micro-coupure. Une première solution consiste à remplacer la résistance CTN par une résistance fixe en parallèle avec un commutateur commandable tel qu'un triac ou un relais. En régime permanent, à courant sensiblement constant, le triac ou le relais court-circuite la résistance. Lors de phases transitoires, le triac ou le relais est ouvert et le courant à destination du condensateur CF et de la charge 2 est limité par la résistance fixe. Toutefois, de tels dispositifs présentent des inconvénients en termes de rapidité de réaction, et/ou d'augmentation de la dissipation de puissance, et/ou d'encombrement. Par exemple, un dispositif à relais impose un circuit de commande relativement complexe, très dissipatif, et utilise des signaux externes au dispositif et/ou au convertisseur, ainsi qu'une alimentation auxiliaire basse tension.

On a également proposé de charger le condensateur CF progressivement en utilisant un circuit de charge par angle de phase. Un tel circuit permet de n'amorcer la charge du condensateur que lorsque la tension Vac est supérieure à la tension VL d'un seuil fixé, généralement de quelques dizaines de volts. Ce système relativement efficace présente toutefois également des inconvénients de réalisation notamment en termes d'encombrement. En outre, comme un dispositif à relais, il requiert un circuit de commande ainsi qu'une alimentation basse tension supplémentaires.

La présente invention vise à pallier les inconvénients des convertisseurs connus en proposant un nouveau convertisseur alternatif-continu.

La présente invention vise plus particulièrement à éviter la transmission de pics de courant jusqu'à la charge.

La présente invention vise également à proposer un tel convertisseur qui présente une perte de puissance réduite.

La présente invention vise également à proposer un convertisseur autonome, c'est-à-dire qui n'implique pas le recours à une alimentation supplémentaire.

La présente invention vise également à proposer un convertisseur automatique, c'est-à-dire qui ne requiert pas l'utilisation de signaux externes au convertisseur lui-même.

La présente invention vise en outre un tel convertisseur qui s'adapte automatiquement à l'amplitude de la tension d'alimentation.

Pour atteindre ces objets, la présente invention prévoit un convertisseur alternatif-continu comprenant un condensateur de filtrage, et comportant :
une première branche comportant essentiellement un premier moyen de redressement et un moyen de limitation du courant ;
une seconde branche comportant essentiellement un second moyen de redressement dont la chute de tension série est limitée à celle des commutateurs le constituant ; et
un moyen de sélection de l'un des deux moyens de redressement.

Selon un mode de réalisation de la présente invention, le moyen de sélection est propre à sélectionner la seconde branche quand l'écart entre la tension aux bornes du condensateur de filtrage et la valeur maximale de la tension d'alimentation est inférieur à une valeur de référence fixée.

Selon un mode de réalisation de la présente invention, la première branche comporte un retardateur de la mise en conduction du premier moyen de redressement par rapport au passage par zéro de l'écart entre la tension d'alimentation et la tension redressée et filtrée, de façon à permettre la sélection de la seconde branche par le moyen de sélection.

Selon un mode de réalisation de la présente invention, le moyen de sélection comprend un circuit de commande et un commutateur de sélection, intercalés entre une sortie du premier moyen de redressement et une borne de commande d'au moins un commutateur associé à la seconde branche.

Selon un mode de réalisation de la présente invention, le circuit de commande comporte un détecteur crête du niveau maximal de la tension d'alimentation non-atténuée, et un diviseur résistif propre à fixer la valeur de référence fixée.

Selon un mode de réalisation de la présente invention, le commutateur de la seconde branche est un commutateur unidirectionnel constitutif du second moyen de redressement.

Selon un mode de réalisation de la présente invention, le convertisseur est de type pleine onde, le premier moyen de redressement étant un pont de diodes et le second moyen de redressement étant un pont mixte dont les deux branches comprennent chacune une diode et un commutateur commandable, les deux diodes du second moyen de redressement étant des diodes de recirculation partagées avec le premier moyen de redressement.

Selon un mode de réalisation de la présente invention, le retardateur est un thyristor à gâchette de cathode dont l'anode est reliée à une borne de sortie du moyen de limitation du courant, dont la cathode est reliée à une borne du condensateur de filtrage, et dont la gâchette est ramenée à l'anode par l'intermédiaire d'une diode Zener dont l'anode est reliée à la gâchette de cathode du thyristor.

Selon un mode de réalisation de la présente invention, le commutateur de sélection est constitué d'un premier transistor dont une première borne de puissance, reliée à une borne de sortie du moyen de limitation, constitue une première borne d'entrée du moyen de sélection, dont une seconde borne de puissance reliée à des bornes de commande de commutateurs d'entrée ou de sortie du second moyen de redressement constitue la sortie du moyen de sélection, et dont une borne de commande est connectée à une première borne de puissance d'un second transistor du même type que le premier transistor, une seconde borne de puissance du second transistor reliée à la sortie du premier moyen de redressement constituant une seconde borne d'entrée du moyen de sélection, et une borne de commande du second transistor constituant la borne de commande du commutateur recevant un signal de commande du circuit de commande.

Selon un mode de réalisation de la présente invention, le moyen de limitation du courant est connecté entre une borne de sortie du premier moyen de redressement et une première borne de tension redressée du condensateur de filtrage.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 illustre de façon schématique un convertisseur alternatif-continu selon l'état de la technique ;
la figure 2 illustre sous forme de schéma-blocs fonctionnel un convertisseur alternatif-continu selon un mode de réalisation de la présente invention ;
la figure 3 illustre un mode de réalisation du circuit de la figure 2 ;
la figure 4 illustre schématiquement un mode de réalisation d'un moyen de sélection que comporte le convertisseur de la figure 3 ; et
la figure 5 illustre une variante de réalisation d'un circuit de commande que comporte le moyen de sélection de la figure 4.

Par souci de clarté, des éléments identiques ont été désignés aux différentes figures par des références identiques.

La figure 2 illustre, sous forme d'un schéma-blocs fonctionnel, un circuit convertisseur de tension alternatif-continu selon l'invention. Une source 1 d'une haute tension alternative Vac, par exemple une tension du secteur de 110 ou 220 volts, alimente une charge 2 par l'intermédiaire d'un convertisseur constitué d'un circuit de redressement 20 et d'un condensateur de filtrage CF. Le condensateur CF est placé en parallèle avec la charge 2 entre des points de sortie de tension redressée positive P et de référence G du circuit 20.

Une caractéristique de l'invention est de prévoir, dans le circuit de redressement 20, deux branches 21 et 22 propres à effectuer chacune et individuellement le redressement souhaité. En d'autres termes, chaque branche 21 ou 22 permet, prise isolément en l'absence de l'autre branche 22 ou 21, d'obtenir la tension redressée voulue. Ainsi, si le circuit de redressement 20 est de type "demi-onde", chacune des branches 21 et 22 constitue un circuit de redressement mono-alternance. Par contre, chaque branche 21 et 22 devra pouvoir à elle seule opérer un redressement double-alternance si le circuit de redressement 20 est de type "pleine-onde". On aurait pu penser que ce qui s'apparente à un dédoublement de la structure de redressement du convertisseur conduise à un circuit encombrant et de commande complexe, incompatible avec les objectifs de l'invention. Or, à l'inverse et comme cela ressortira de la description suivante, un tel dédoublement non seulement n'augmente pas la complexité du convertisseur, mais encore en accroît les performances.

Selon l'invention, une première branche 21 comporte un moyen de limitation du courant, par exemple une résistance fixe R. La seconde branche 22 ne comporte aucun moyen de limitation de courant. Les branches 21 et 22 comportent également chacune un moyen de redressement 210 et 220, par exemple constitué de commutateurs (au plus simple, des diodes). Les deux moyens 210 et 220 peuvent assurer le même type de redressement (mono-alternance ou double-alternance). La seconde branche 22 présente, à ses bornes, une chute de tension série minimisée, par exemple réduite à celle des commutateurs composant le moyen de redressement 220. Le circuit de redressement 20 comporte également un moyen de sélection 23 propre à sélectionner une seule des deux branches 21 et 22 pour fournir la tension redressée de sortie, entre les bornes P et G où sont connectés en parallèle la charge 2 et le condensateur de filtrage CF.

Le moyen de sélection 23 permet de sélectionner, de façon autonome et automatique, la seconde branche 22 en régime établi et, lors d'une phase transitoire à pic(s) de courant, la première branche 21. Le moyen de sélection 23 est représenté fonctionnellement en figure 2 par un circuit de commande (CONTROL) 24 de deux commutateurs K1 et K2. Selon l'invention, le moyen de sélection 23 tire son alimentation de la source 1. Chaque commutateur K1, K2 est inséré dans une des branches 21 et 22 en série avec le moyen de redressement 210 et 220 correspondant.

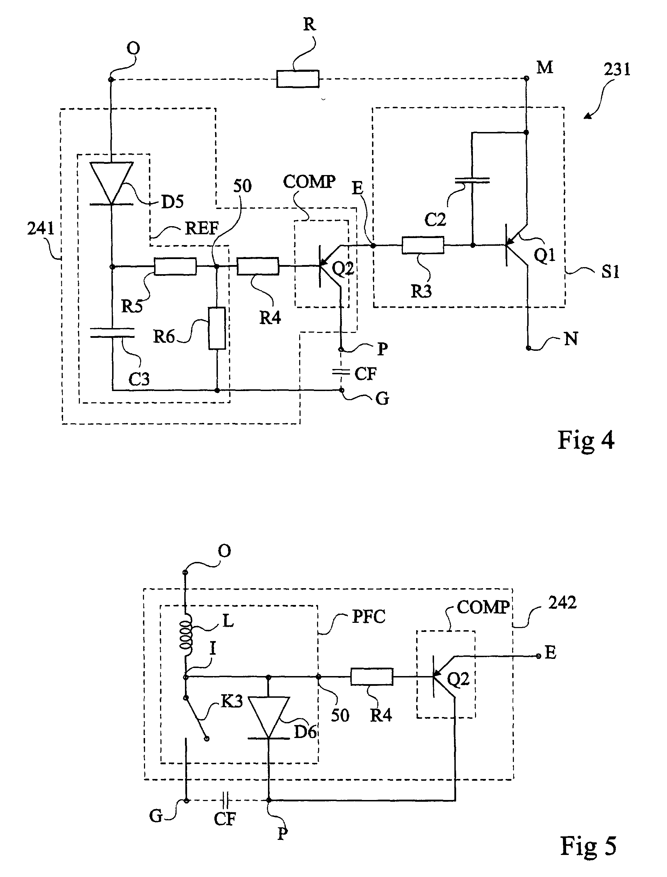

Le fonctionnement du circuit de commande 24 sera étudié ci-après plus en détail en relation avec les figures 3 et 4. Le circuit 24 détermine la sélection d'une des branches 21 et 22, c'est-à-dire la commande des commutateurs associés K1 et K2, à partir, d'une part, de l'écart Δ entre le niveau de charge courant VL du condensateur CF et la tension crête Vacmax et, d'autre part, d'une valeur de référence Vref. Selon l'invention, ces deux signaux Δ et Vref sont déterminés de façon autonome, c'est-à-dire interne au convertisseur.

Les commutateurs K1 et K2 peuvent être tant des éléments constituant l'un et/ou l'autre des deux moyens de redressement 210 et 220, que des commutateurs physiquement distincts des moyens de redressement 210 et 220. En outre, l'un des commutateurs K1, K2 peut être un élément autonome par rapport au circuit de commande 24, tel que, par exemple, un retardateur à la sélection de la branche correspondante 21, 22. De préférence, le commutateur K1 constitue un retardateur de la mise en conduction de la première branche 21. Plus particulièrement, comme cela sera exposé plus en détail ci-après, le commutateur K1 provoque une élévation du niveau de tension de déclenchement automatique du premier moyen de redressement 210 par rapport à son niveau de déclenchement naturel.

La figure 3 illustre un mode de réalisation particulier de la présente invention appliquée à un redressement de type pleine onde.

Le premier moyen de redressement 210 est constitué d'un pont de diodes. On désigne ci-après par D1 et D2 les deux diodes d'entrée dont les anodes sont respectivement connectées à une des bornes de la source 1. Leurs cathodes sont interconnectées en un point O qui constitue la sortie positive du moyen de redressement 210. On désigne par D3 et D4 les diodes de recirculation du pont dont les anodes interconnectées définissent la borne G de référence de la tension redressée. Plus particulièrement, la diode de recirculation D3 est associée à la diode D1, alors que la diode D4 est associée à la diode D2. La résistance R de limitation du courant est intercalée entre la sortie O du pont 210 et une première borne M de puissance d'un retardateur K1. Une seconde borne de puissance du retardateur K1 constitue la sortie de la première branche 21, et est connectée au point P.

Le retardateur K1 comprend un thyristor T à gâchette de cathode et une diode Zener Z. L'anode M du thyristor T est connectée à la borne de la résistance de limitation R opposée à la sortie O du pont 210. Sa cathode est connectée au point P. L'anode de la diode Zener Z est reliée à la gâchette du thyristor T. La cathode de la diode Zener Z est ramenée à l'anode M du thyristor T. Par conséquent, la fermeture du thyristor T s'effectue automatiquement dès que la tension à ses bornes dépasse le seuil fixé par la diode Z. La diode Zener Z, au contraire d'une alimentation auxiliaire, ne fournit donc aucune énergie. Elle sert à fixer le retard à la fermeture du retardateur K1 par rapport à l'instant de chaque alternance auquel la tension d'alimentation Vac devient supérieure - en valeur absolue - au niveau de charge VL du condensateur CF.

Le second moyen de redressement 220 est constitué d'un pont mixte comprenant deux diodes et deux thyristors Th1 et Th2 à gâchette de cathode. Les thyristors Th1 et Th2 constituent à la fois une partie du second moyen de redressement 220 et le commutateur K2 de la figure 2. Leurs gâchettes sont interconnectées, par l'intermédiaire de résistances de limitation respectives Rg1 et Rg2, à une même sortie N du moyen de sélection 23. De préférence, les deux thyristors Th1 et Th2 sont les éléments d'entrée du pont, leurs anodes étant respectivement connectées à une des bornes de la source 1. La sortie du pont 220, constituée par le point commun de cathode des thyristors Th1 et Th2, est reliée au point P. De préférence, les diodes de recirculation D3 et D4 du pont de diodes constituent également les éléments de recirculation du pont mixte. Aucune connexion supplémentaire n'est alors nécessaire par rapport à celles décrites ci-dessus pour obtenir les deux moyens de redressement 210 et 220. De plus, on dispose ainsi d'une borne de référence G de tension redressée commune aux deux branches 21 et 22 du circuit de redressement complet 20.

Le moyen de sélection 23 comprend le circuit de commande 24 et un commutateur de sélection S. Le commutateur de sélection S permet de valider un trajet de courant unidirectionnel du point M de la première branche 21 vers le point N de commande du commutateur K2. En d'autres termes, une première borne de puissance du commutateur de sélection S est intercalée entre le moyen de limitation de courant R et le retardateur K1. Une seconde borne de puissance du commutateur de sélection S est reliée au point commun de connexion des résistances de limitation respectives Rg1 et Rg2 des thyristors Th1 et Th2. Le circuit de commande 24 délivre un signal de commande du commutateur de sélection S en fonction de l'état de charge du condensateur CF. Plus particulièrement, la commande délivrée dépend d'une comparaison, par rapport à une référence fixe Vref, de l'écart Δ entre la tension de sortie VL et la tension maximale ou tension crête Vacmax de la source 1. Selon l'invention, la détermination du niveau de référence Vref ainsi que la comparaison sont effectuées de façon autonome, sans requérir de signaux de référence et/ou d'alimentation externes au circuit de redressement 20. Une telle autonomie est obtenue en utilisant, pour établir le niveau de référence Vref et/ou effectuer la comparaison et/ou l'alimentation des éléments du circuit 24, uniquement des signaux de tension redressée et/ou de tension redressée et filtrée. Ceci est illustré en figure 3 par la connexion d'une première borne d'entrée du circuit de commande 24 à la borne de sortie redressée positive O du premier moyen de redressement 210 et d'une deuxième borne d'entrée du circuit de commande 24 à une électrode du condensateur de filtrage CF (à la borne de référence G).

Tant que la tension d'alimentation Vac est inférieure - en valeur absolue - à la tension VL aux bornes du condensateur de filtrage CF, les moyens de redressement 210 et 220 sont automatiquement dévalidés. En effet, en fonction du signe de l'alternance, la jonction d'une D3 ou D4 des diodes de recirculation des deux moyens de redressement 210 et 220 est polarisée en inverse, ainsi que la jonction de l'élément d'entrée D2, Th2 ou D1, Th1 associé à l'autre D4 ou D3 diode de recirculation. Les bornes d'entrée alternative du circuit de redressement 20 sont alors isolées de ses bornes P et G de sortie redressée. La charge 2 est alimentée par la décharge du condensateur CF.

Lorsque la tension d'alimentation Vac est supérieure - toujours en valeur absolue - à la tension VL aux bornes du condensateur de filtrage CF, le fonctionnement dépend du niveau de charge de celui-ci et est contrôlé par le moyen de sélection 23.

Dès que la tension Vac devient supérieure - en valeur absolue et à la chute de tension dans le moyen R de limitation du courant près - à la tension VL, l'une des deux diodes D1 ou D2 devient passante. La tension redressée O à la sortie du premier moyen de redressement 210 suit la tension d'alimentation Vac. Il en est de même pour la tension aux bornes de la résistance de limitation R. Le circuit de commande 24 compare alors, à une valeur maximale de référence Vref, l'écart Δ entre le niveau de charge VL du condensateur CF et la tension crête V1max. En d'autres termes, le circuit de commande 24 compare l'état de charge du condensateur CF par rapport à un certain niveau minimal autorisé en régime établi.

Si l'écart Δ est supérieur à la valeur de référence Vref, la charge du condensateur CF est inférieure au niveau minimal autorisé. Des pics de courant risquent d'apparaître et le circuit de commande 24 pilote le commutateur de sélection S de telle façon qu'il demeure ouvert. Les thyristors Th1 et Th2 restent donc bloqués, leurs gâchettes respectives étant "en l'air". La tension aux bornes du retardateur K1 croît en suivant la variation de la tension Vac, jusqu'à atteindre le seuil de la diode Zener Z. Une fois atteint ce seuil, un courant de gâchette apparaît et le thyristor T s'amorce. Le redressement s'effectue alors dans la branche 21.

Si l'écart Δ est inférieur ou égal à la valeur de référence Vref, la charge du condensateur CF est au moins égale à la valeur minimale autorisée. Le circuit de commande 24 pilote alors le commutateur de sélection S de telle façon qu'il se ferme. La tension aux bornes du retardateur K1 croît en suivant la variation de la tension Vac et un courant de gâchette croissant est appliqué, aux thyristors Th1 et Th2, via le commutateur S. Alors, l'un des thyristors Th1 ou Th2 s'amorce. Le redressement s'effectue par l'intermédiaire de la seconde branche 22.

L'amorçage du thyristor Th1 ou Th2 s'effectue aussitôt que le courant de gâchette a atteint et dépassé des valeur et durée fixées par les caractéristiques propres à chacun des thyristors et qui ne dépendent que de leurs conditions de fabrication. Lors de son déclenchement, le thyristor Th1 ou Th2 court-circuite la résistance de limitation R et le circuit de commande constitué du commutateur S et de la résistance Rg1 ou Rg2. La durée d'application de l'impulsion de commande sur les gâchettes de ces thyristors est donc réduite à la valeur minimale imposée par les seules contraintes technologiques de structure des thyristors.

Pour éviter un conflit en régime établi, il convient de choisir une diode Zener Z d'un seuil suffisamment élevé pour empêcher l'amorçage du thyristor T, une fois que la charge du condensateur CF a dépassé le niveau minimal autorisé, suffisamment longtemps pour assurer le déclenchement d'un des thyristors Th1 ou Th2. Le rôle du retardateur K1 est donc de retarder la sélection de la première branche 21 pour permettre la sélection de la seconde branche 22 en régime établi.

Le circuit de redressement 20 selon l'invention présente divers avantages par rapport aux circuits de l'art antérieur qui ressortent de la description précédente.

En régime établi, la dissipation de puissance est réduite à la seule dissipation des éléments actifs Th1 et D3 ou Th2 et D4 de la seconde branche 22. Cette dissipation est négligeable par rapport à celle induite par une résistance CTN, ou par un court-circuit de type triac.

En outre, la puissance dissipée lors de l'amorçage du thyristor Th1 ou Th2 dans les résistances R et Rg1 ou Rg2 est négligeable. En effet, d'une part elle est extrêmment faible par rapport à la puissance dissipée dans un circuit de court-circuit classique. D'autre part, comme cela a été exposé précédemment, la durée et le niveau de l'impulsion de commande sont automatiquement ajustés aux valeurs minimales requises. Au contraire, les commandes des dispositifs antérieurs de court-circuit de type relais et triac devaient être permanentes.

En cas d'interruption de la tension d'alimentation en régime établi, le circuit de redressement 20 se réinitialise automatiquement par ouverture de tous les commutateurs. Lors du rétablissement de l'alimentation Vac, le circuit de sélection 23 détermine automatiquement quelle branche utiliser en fonction des risques de pics de courant, c'est à dire de l'état de charge du condensateur de filtrage CF.

Il est en outre possible de réaliser le moyen de sélection 23 par des dispositifs autonomes, c'est-à-dire ne requérant pas d'alimentation auxiliaire. Les figures 4 et 5 illustrent des exemples d'un commutateur de sélection S et de moyens de commande 24 utilisables dans le mode de réalisation de la figure 3 qui sont autonomes et propres à assurer le fonctionnement souhaité décrit précédemment.

La figure 4 illustre un mode de réalisation complet d'un moyen de sélection utilisable dans le circuit de la figure 3. A titre d'exemple non-limitatif, on considère un moyen de sélection 231 comportant essentiellement un commutateur de sélection S1 commandable en courant. Le circuit de commande associé 241 est alors propre à délivrer une commande en courant.

Le commutateur S1 est constitué d'un transistor bipolaire de type PNP Q1 dont l'émetteur et le collecteur constituent les première et seconde bornes M et N de puissance du commutateur S1. La base du transistor Q1 est connectée, par l'intermédiaire d'une résistance de protection R3 (limitation du courant), à la borne E de commande du commutateur de sélection S1. De préférence, la base et l'émetteur du transistor Q1 sont interconnectées par un condensateur C2. Le condensateur C2 lisse le cas échéant un signal de commande (courant de base) haute fréquence délivré par le circuit de commande 241.

Le circuit de commande 241 associé à un commutateur de sélection commandable en courant, tel que le commutateur S1 décrit précédemment, comporte essentiellement un circuit REF propre à fixer une valeur de référence Vref et un comparateur COMP.

Le comparateur COMP sert à comparer la référence Vref au niveau de charge courant VL du condensateur de filtrage VF, et à délivrer un signal de commande au commutateur de sélection S1. Si le niveau de charge courant VL est supérieur à la référence Vref fournie par le circuit de référence REF, le comparateur COMP ferme le commutateur S1. Le comparateur COMP est, par exemple, un second transistor bipolaire de type PNP Q2. Le collecteur du transistor Q2 est connecté au point P. L'émetteur du transistor Q2 constitue la sortie du circuit de commande 241, reliée à la borne E. La base du transistor Q2 est reliée à la sortie du circuit REF. En variante, on pourra prévoir un commutateur S1 et un comparateur COMP commandables en tension, par exemple des transistors MOS de type P.

Le circuit REF comprend un détecteur de la valeur crête Vacmax, constitué d'un condensateur C3 et d'une diode D5. Le détecteur C3-D5 est connecté entre les deux bornes O et G de sortie redressée du premier moyen de redressement 210. La diode D5 est intercalée entre le point O et le condensateur C3 de façon à imposer une circulation du courant dans le détecteur depuis le point O. Un diviseur résistif fixe l'écart maximal Δ autorisé entre Vac et le niveau de charge VL du condensateur de filtrage CF. En d'autres termes, la tension de référence au point de sortie 50 du circuit REF est égale au niveau de charge minimal autorisé en régime établi pour le condensateur de filtrage CF. Une première résistance R5 du diviseur est intercalée entre l'électrode du condensateur de détection C3 et la sortie 50. Une seconde résistance R6 du diviseur est intercalée entre la sortie 50 et l'autre électrode du condensateur C3, connectée au point G.

Le comparateur COMP étant un transistor bipolaire Q2, et le signal de commande délivré par le circuit de référence REF étant un signal de tension, on prévoit une résistance R4 de conversion tension-courant entre la sortie 50 et la base du transistor Q2.

Le fonctionnement du moyen de sélection 23 est alors le suivant. On suppose que l'on part d'un état initial de repos dans lequel les condensateurs de filtrage CF et du détecteur crête C3 sont tous deux totalement déchargés (VCF=VC3=0), tous les commutateurs du circuit sont bloqués.

A partir de la mise en route de la source 1, on applique une tension alternative Vac aux bornes d'entrée alternative des deux moyens de redressement bloqués 210 et 220. Aucune commande n'étant appliquée, le pont mixte 220 demeure bloqué. Dès que les seuils des jonctions Vj de la paire de diodes appropriée D1, D3 ou D2, D4 du pont simple et de la diode D5 du détecteur crête sont dépassés (Vac≥[Vj (D1/D2)+Vj (D3/D4) +Vj (D5)]), le condensateur C3 se charge pendant le reste de la première demi-alternance de la tension alternative Vac. La capacité du condensateur C3 est très faible de façon à limiter le surcourant induit par sa charge. La tension au point 50 de sortie du circuit de référence croît en suivant le niveau de charge du condensateur C3. Le condensateur étant déchargé, le second transistor Q2 demeure bloqué, sa jonction base-collecteur étant polarisée en inverse.

Dès que la tension d'alimentation Vac dépasse la somme des chutes de tension série du premier moyen de redressement 210, la chute de tension aux bornes O et M de la résistance R et le seuil du retardateur K1, celui-ci devient passant et le condensateur CF commence à se charger.

Pendant la demi-alternance suivante de décroissance de la tension d'alimentation Vac, le condensateur de filtrage CF se décharge dans la charge 2. Par contre, le condensateur C3 du détecteur reste à un niveau de charge sensiblement constant. En effet, ses chemins de décharge possibles comportent tous au moins une jonction polarisée en inverse. Sa décharge est limitée aux courants de fuite de ces jonctions.

Ce fonctionnement se poursuit jusqu'au moment où la charge du condensateur CF atteint la valeur de référence, c'est-à-dire la tension de sortie du pont résistif R5-R6, et la dépasse de la valeur de la chute de tension de la résistance de conversion R4. Alors, si la tension au point M (c'est-à-dire la tension d'alimentation Vac redressée, atténuée de la chute de tension aux bornes de la résistance de limitation R) dépasse le niveau de charge VL de la chute de tension aux bornes de la résistance R3, le transistor Q2 se ferme. Cette fermeture sélectionne la deuxième branche 22 en provoquant la fermeture du transistor Q1 donc un courant de commande sur la borne N du commutateur K2.

Ensuite, à chaque alternance, pendant le retard (fixé par la diode Z) de sélection automatique de la première branche 21, le comparateur Q2 compare le niveau de charge VL du condensateur de filtrage CF à la référence fixe. Tant que ce niveau de charge est supérieur ou égal à cette référence, le transistor Q2 se ferme et provoque la fermeture du transistor Q1 dès que la tension au point M atteint et dépasse le niveau requis. La deuxième branche 22 est sélectionnée. Le retardateur K1 doit donc présenter un retard supérieur aux chutes de tension séries que doit compenser la tension au point M pour provoquer les fermetures des transistors Q1 et Q2 et du commutateur K2.

Si le condensateur de filtrage CF est trop déchargé, le comparateur Q2 reste bloqué et aucune impulsion de commande n'est transmise. On sélectionne alors la première branche 21.

Le fonctionnement du circuit 241 est donc autonome et automatique. De plus, il est plus rapide que les dispositifs existants. En outre, le circuit 241 est particulièrement avantageux en ce que le détecteur crête C3-D5 s'adapte automatiquement au niveau crête de l'alimentation. Ceci permet son utilisation dans des dispositifs mobiles destinés à pouvoir fonctionner sous plusieurs tensions d'alimentation sans recourir à des transformateurs.

La figure 5 illustre une variante de réalisation d'un circuit de commande 242 pour commander, en régime établi, la fermeture d'un commutateur de sélection commandable en courant tel que le commutateur S1 de la figure 4.

Plus particulièrement, le circuit de commande 242 de la figure 5 se distingue du circuit de commande 241 de la figure 4 par une réalisation différente du circuit de référence PFC. Le circuit de comparaison COMP est identique.

Le circuit PFC est un circuit de correction de facteur de puissance constitué d'une inductance L commutée, commandée par un commutateur en série K3. L'inductance L et le commutateur K3 sont intercalées entre les points O (sortie positive de tension redressée du premier pont 210 non-atténuée par la résistance de limitation R) et G (borne de référence de tension redressée du circuit de redressement 20). Le point milieu I du circuit PFC constitue sa sortie reliée, par l'intermédiaire d'une diode D6, à la borne P du condensateur de filtrage CF. Le point milieu I du circuit PFC est relié à la borne de commande du comparateur Q2 par l'intermédiaire du convertisseur R4. La commande du commutateur K3 est effectuée par un quelconque moyen connu. Par exemple, si le commutateur K3 est un transistor MOS, on pourra utiliser un circuit commercialisé par la présente demanderesse et connu sous la dénomination L4981A.

Comme tout circuit de correction de facteur de puissance, le commutateur R3 n'est commandé que lorsque le condensateur de filtrage CF est suffisamment chargé, c'est-à-dire à partir de la valeur minimale autorisée en régime établi. Dès que le commutateur K3 conduit, en supposant la tension au point M suffisamment élevée pour compenser les chutes de tension série, un courant est extrait de la base du transistor de comparaison Q2. Le transistor de sélection Q1 (non représenté en figure 5) est commandé à la fermeture et une impulsion de commande de fermeture est transmise au commutateur K2. Un tel circuit de commande 242 n'impose pas de recours à une alimentation auxiliaire. Il prélève son alimentation sur l'alimentation redressée elle-même, entre les points O et P. En outre, il ne fait appel à aucun signal externe pour fixer la référence. Il est donc autonome. Par ailleurs, le circuit 242 est plus rapide que les systèmes antérieurs.

Bien entendu, la présente invention est susceptible de diverses variantes et modifications qui apparaîtront à l'homme de l'art. En particulier, les divers modes de réalisation ont été exposés à titre non-limitatif. L'homme de l'art saura choisir, en fonction de l'application, des éléments propres à mettre en oeuvre le principe de sélection selon la présente invention. Ainsi, l'homme de l'art saura modifier les éléments des premier et second moyens de redressement. Par exemple, si un redressement "demi-onde" est souhaité, on pourra remplacer le pont de diodes de la figure 3 par une unique diode et le pont mixte par un unique thyristor. De même, on a choisi d'utiliser une première branche de limitation dont le moyen de redressement se déclenche automatiquement (pont de diodes) et une seconde branche dont le moyen de redressement comprend des éléments déclenchés sur commande. D'autres options sont possibles. Ainsi, on peut utiliser des moyens de redressement comportant tous deux des éléments déclenchés sur commande. Le circuit de commande sera alors adapté à commander le déclenchement de l'un ou l'autre. Il peut également s'agir de deux moyens se déclenchant automatiquement, la sélection d'une seule branche étant effectuée par une commande asymétrique de commutateurs de sélection placés dans chacune des branches.

## Revendications

1. Convertisseur alternatif-continu comprenant un condensateur de filtrage (CF), **caractérisé en ce qu'**il comporte :
une première branche (21) comportant essentiellement un premier moyen de redressement (210) et un moyen de limitation du courant (R) ;
une seconde branche (22) comportant essentiellement un second moyen de redressement (220) dont la chute de tension série est limitée à celle des commutateurs (Th1, Th2, D3, D4) le constituant ; et
un moyen de sélection (23) de l'un des deux moyens de redressement.

2. Convertisseur selon la revendication 1, **caractérisé en ce que** le moyen de sélection (23) est propre à sélectionner la seconde branche (22) quand l'écart (Δ) entre la tension (VL) aux bornes du condensateur de filtrage (CF) et la valeur maximale de la tension d'alimentation (Vac) est inférieur à une valeur de référence fixée (Vref).

3. Convertisseur selon la revendication 1 ou 2, **caractérisé en ce que** la première branche (21) comporte un retardateur (K1) de la mise en conduction du premier moyen de redressement (210) par rapport au passage par zéro de l'écart entre la tension d'alimentation (Vac) et la tension redressée et filtrée (VL), de façon à permettre la sélection de la seconde branche (22) par le moyen de sélection (23).

4. Convertisseur selon la revendication 3, **caractérisé en ce que** le moyen de sélection (23) comprend un circuit de commande (24) et un commutateur de sélection (S), intercalés entre une sortie (O) du premier moyen de redressement (210) et une borne de commande d'au moins un commutateur (K2) associé à la seconde branche (22).

5. Convertisseur selon les revendications 2 et 4, **caractérisé en ce que** le circuit de commande (24) comporte un détecteur crête (C3, D5) du niveau maximal de la tension d'alimentation (Vac) non-atténuée, et un diviseur résistif (R5, R6) propre à fixer la valeur de référence fixée (Vref).

6. Convertisseur selon la revendication 4 ou 5, **caractérisé en ce que** le commutateur (K2) de la seconde branche (22) est un commutateur unidirectionnel constitutif du second moyen de redressement (220).

7. Convertisseur selon la revendication 6, **caractérisé en ce que** le convertisseur est de type pleine onde, le premier moyen de redressement (210) étant un pont de diodes (D1, D2, D3, D4) et le second moyen de redressement (220) étant un pont mixte dont les deux branches comprennent chacune une diode (D3, D4) et un commutateur commandable (Th1, Th2), les deux diodes du second moyen de redressement étant des diodes de recirculation partagées avec le premier moyen de redressement.

8. Convertisseur selon l'une quelconque des revendications 3 à 7, **caractérisé en ce que** le retardateur (K1) est un thyristor (T) à gâchette de cathode dont l'anode est reliée à une borne de sortie (M) du moyen de limitation du courant (R), dont la cathode est reliée à une borne (P) du condensateur de filtrage (CF), et dont la gâchette est ramenée à l'anode par l'intermédiaire d'une diode Zener (Z) dont l'anode est reliée à la gâchette de cathode du thyristor.

9. Convertisseur selon l'une quelconque des revendications 4 à 7, **caractérisé en ce que** le commutateur de sélection (S) est constitué d'un premier transistor (Q2) dont une première borne de puissance (M), reliée à une borne de sortie du moyen de limitation (R), constitue une première borne d'entrée du moyen de sélection (23), dont une seconde borne de puissance (N) reliée à des bornes de commande de commutateurs d'entrée ou de sortie (Th1, Th2) du second moyen de redressement (220) constitue la sortie du moyen de sélection, et dont une borne de commande est connectée à une première borne de puissance d'un second transistor (Q1) du même type que le premier transistor, une seconde borne de puissance du second transistor reliée à la sortie du premier moyen de redressement (210) constituant une seconde borne d'entrée du moyen de sélection, et une borne de commande (E) du second transistor constituant la borne de commande du commutateur recevant un signal de commande du circuit de commande (24).

10. Convertisseur selon l'une quelconque des revendications 1 à 8, **caractérisé en ce que** le moyen de limitation du courant (R) est connecté entre une borne de sortie (O) du premier moyen de redressement (210) et une première borne de tension redressée (P) du condensateur de filtrage (CF).
